(19) Europäisches Patentamt
European Patent Office
Office européen des brevets

(11) Publication number: 0 276 879 B1

(12) # EUROPEAN PATENT SPECIFICATION

(45) Date of publication of patent specification: 23.10.91 Bulletin 91/43

(51) Int. Cl.[5]: C23F 11/12, C23F 11/14, C23F 11/18

(21) Application number: 88200047.4

(22) Date of filing: 14.01.88

(54) **Process and composition for inhibiting iron and steel corrosion.**

(30) Priority: 30.01.87 US 8719

(43) Date of publication of application: 03.08.88 Bulletin 88/31

(45) Publication of the grant of the patent: 23.10.91 Bulletin 91/43

(84) Designated Contracting States: DE FR GB IT NL

(56) References cited:
EP-A- 0 209 978
EP-A- 0 212 752
AT-B- 149 199
DE-A- 2 638 305
DE-B- 1 185 036
US-A- 2 907 699
US-A- 4 562 042

(73) Proprietor: PUMPTECH N.V.
Atlantic House Noorderlaan 147 Bus 5C
B-2030 Antwerpen (BE)
(84) Designated Contracting States:
DE GB IT NL
Proprietor: COMPAGNIE DES SERVICES DOWELL SCHLUMBERGER
Z.I. Molina Chazotte
F-42000 St. Etienne (FR)
(84) Designated Contracting States:
FR

(72) Inventor: Frenier, Wayne W.
7514 S. 68th East Place
Tulsa Oklahoma (US)
Inventor: Grannan, Sharon E.
1623 S. 122 East Avenue
Tulsa Oklahoma (US)
Inventor: Hill, Donald G.
8413 E. 31st Court
Tulsa Oklahoma (US)

(74) Representative: Richebourg, Michel François
Etudes et Fabrication Dowell Schlumberger
Z.I. Molina La Chazotte B.P. 90
F-42003 Saint-Etienne Cédex 1 (FR)

EP 0 276 879 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

### BACKGROUND OF THE INVENTION

#### Field of the Invention

The present invention relates to a new and useful class of corrosion inhibitors, and a process of using them. The present invention provides novel compositions of matter which reduce the attack of aqueous acid solutions on ferrous metals at high temperatures, and a process of using them.

#### Technology Review

In the exploration and recovery of oil from underground fields, it is common to "acidize" both new and producing wells with aqueous solutions of strong acids. Various inhibitors for preventing the attack of acids on ferrous metals have been proposed. Of the many inhibitors especially designed to prevent acid attack on well casings, very few provide satisfactory protection at high temperatures. Arsenic and/or various arsenic compounds were used as high temperature corrosion inhibitors, despite their toxic effect. The toxic nature of arsenic and its compounds, and their adverse effect on catalysts used in petroleum refineries, have caused an extensive search for new corrosion inhibitors.

Formic acid, formic acid derivatives and formate esters are used as corrosion inhibitor aids or are components in high temperature HCl formulations. U.S. Patent 3,779,935 to McDougall discloses a composition containing formic acid or formate esters. Good corrosion protection to 200°C is demonstrated. U.S. Patent 4,028,268 to Sullivan et al. discloses a composition containing a formic acid derivative, such as formamide, mixed together with a nitrogen heterocyclic base, an acetylenic alcohol, and a surfactant. Using various combinations of the four components, good corrosion protection to 165°C is reported.

Potassium iodide has been used as a corrosion inhibitor aid in HCl at temperatures up to 150°C. Soviet literature lists mixtures of KI with organic nitrogen compounds (including hexamethylenetetraamine), alkynols and sodium sulfate. These formulations are reported to be effective up to 140°C. See Petroleum Abstracts, 59,682 (1965), 75,917 (1966), 78,725 (1966) and 99,560 (1968).

It would be desirable to have a corrosion inhibitor which is useful in a broader number of situations. For example, highly concentrated hydrochloric acid is often employed in oil well stimulation treatment, but its use can lead to severe corrosion problems, especially at high temperatures. Thus, it would be desirable to have a corrosion inhibitor composition which could inhibit the acid corrosion of ferrous metals even in the presence of concentrated hydrochloric acid at high temperatures, and which is compatible with a variety of additives, for example, surfactants.

### SUMMARY OF THE INVENTION

The invention provides a composition and method for inhibiting the corrosion of iron and steel in the presence of aqueous acid at high temperatures, especially concentrated hydrochloric acid at temperatures above about 100°C. The composition and method comprises adding to an aqueous acid an effective corrosion-inhibiting amount of at least one iodide salt and at least one compound selected from the group of formic acid compounds, formic acid derivatives, and formate esters, together with at least one nitrogen compound or at least one oxygen-containing compound, as hereinafter described. The composition and method of the invention are surprisingly effective in inhibiting the corrosion of iron and steel over a broad range of aqueous acid concentration at high temperatures.

It is an object of the invention to provide an improved composition for inhibiting iron and steel corrosion caused by a corrosive aqueous fluid, comprising an aqueous acid, at least one nitrogen compound or at least one oxygen-containing compound, at least one iodide salt and at least one compound selected from the group of formic acid, formic acid derivatives, and formic esters.

It is another object of the invention to provide an improved method for inhibiting iron and steel corrosion caused by a corrosive aqueous acid fluid, comprising mixing a corrosion-inhibiting amount of a composition including at least one iodide salt and at least one compound selected from the group of formic acid compounds, formic acid derivatives, and formate esters, at least one nitrogen compound or at least one oxygen-containing compound, together with corrosive aqueous acid.

It is an advantage of the invention that the improved composition is surprisingly effective in inhibiting the corrosion of iron and steel over a broad range of aqueous acid concentrations at high temperatures.

It is another advantage of the invention that the improved method for inhibiting corrosion is especially effective in highly concentrated aqueous acid solutions at high temperatures.

## DETAILED DESCRIPTION OF THE INVENTION

The corrosion inhibitors of the present invention include at least one iodide salt and at least one compound selected from the group of formic acid compounds, formic acid derivatives, and formate esters. The compositions also usually include a nitrogen compound, preferably a quaternary alkyl or aryl nitrogen compound or an alkyl amine, and/or an oxygen-containing compound such as a phenyl ketone, phenyl aldehyde, or an alkynol.

Formic acid compounds useful in the practice of the present invention have the structural formula :

$$HCOOR$$

where R is hydrogen a phenyl group, an alkyl group having 1 to 6 carbon atoms, a cycloalkyl group having 5 or 6 carbon atoms, or an alkenyl and alkynyl group having 2 to 6 carbon atoms, which are unsubstituted or contain inert functional groups such as —OH, —COOH, —SH, —COH, =C=O and $—NH_2$ which do not affect corrosion inhibiting properties.

Formic acid derivatives useful in the practice of the present invention include formamides of the structure:

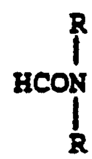

where R is hydrogen, a phenyl group, an alkyl group having 1 to 6 carbon atoms, a cycloalkyl group having 5 or 6 carbon atoms, or an alkenyl and alkynyl groups having 2 to 6 carbon atoms, which are unsubstituted or contain inert functional groups selected from —COH, —OH, =C=O, —COOH, —SH, and $—NH_2$ which do not affect corrosion inhibiting properties. Specific examples of formamides useful in the practice include formamide, dimethylformamide, diethylformamide, and the like.

Formic acid esters useful in the practice of the present invention have the structural formula :

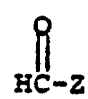

where Z is of an alkoxy group containing from about 1 to about 4 carbons atoms. Specific examples of formic acid esters useful in the practice of the present invention include methylformate, ethylformate, and butylformate.

Iodide salts useful in the practice in the present invention include alkali iodides, alkaline earth iodides, organic iodides, and hydrogen iodide. Potassium iodide and sodium iodide are normally preferred.

The nitrogen compounds useful in the process of the present invention include an aliphatic or aromatic quaternary compound, or an aliphatic or aromatic amine. Suitable aliphatic amines include saturated alkyl and unsaturated alkene amines, wherein each alkyl group may contain from 1 to about 20 carbon atoms and each alkene group may contain from 2 to about 20 carbon atoms. Preferably each aliphatic amine includes one long chain alkyl or alkene group containing from about 10 to about 20 carbon atoms, and two short chain alkyl groups containing from 1 to about 4 carbon atoms. Quaternary nitrogen compounds, also known as quaternary ammonium compounds, useful in the process of the present invention include saturated alkyl or unsaturated alkene quaternary compounds, aryl or alkylaryl quaternary compounds. Each alkyl group, including alkyl substituted aryl group, may contain from 1 to 20 carbon atoms and each alkene group may contain from 2 to 20 carbon atoms. Suitable aromatic amines may be illustrated by pyridine ; 2,6-dimethylpyridine (lutidine) ; hexahydropyridine (piperidine) ; quinoline ; isoquinoline ; alpha-methylquinoline (quinaldine) ; benzoquinoline; acridine ; morpholine ; and pyrimidine. Suitable quaternary compounds may be illustrated by C-alkyl pyridine-N-methyl chloride quaternary, C-alkyl pyridine-N-benzyl chloride quaternary, quinoline-N-benzyl chloride quaternary, isoquinoline-N-benzyl chloride quaternary, thioalkyl pyridine quaternary, thioquinoline quaternary, benzoquinoline quaternary, thiobenzoquinoline quaternary, imidazole quaternary, pyrimidine quaternary, and carbazole quaternary. Any of these nitrogen compounds may be inertly substituted, that is substituted by groups which do not adversely affect the corrosion inhibiting properties of the corresponding unsubstituted composition. Typical inert substituents include methyl, chloro, nitro, hydroxy, and methoxy. Unsubstituted or inertly substituted quinoliniums are normally preferred. For example naphthylmethylquinolinium chloride (NMQCl) may be used.

The composition of the present invention may optionally include an oxygen containing compound, such as an alkenylphenone. Examples of alkenylphenones include 2-benzyol-3-hydroxy-1-propene, 2-benzoyl-3-methoxy-1-propene, and 2-benzoyl-1,3-dimethoxypropane. The preparation of alkenylphenones is fully described in pending, commonly owned application Serial No. 06/765,890. Other oxygen containing compounds useful in the practice of the present invention include acetylenic alcohols such as ethyl octynol, propargyl alcohol, hexynol and other acetylenic alcohols having the structural formula :

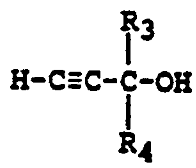

where $R_3$ is selected from the group consisting of—H, and—$CH_3$, and $R_4$ is selected from the group consisting of hydrogen, alkyl groups having 1 to 18 carbon atoms, naphthalyl, phenyl and alkyl substituted phenyls having 1 to 10 carbon atoms in the alkyl substitutent. Examples of such alcohols include methyl butynol, methyl pentyanol, hexynol, ethyl octynol, propargyl alcohol, benzyl butynol, naphthalyl butynol, and the like. Acetylentic alcohols having 3 to 10 carbon atoms are preferred.

The aqueous corrosive acid in the present invention is usually hydrochloric acid. However, other aqueous acids including organic or inorganic non-oxidizing acids may also be used. Examples of organic non-oxidizing acids include formic acid, acetic acid, and citric acid. Examples of non-oxidizing inorganic acids include sulfuric acid phosphoric acid, and hydrofluoric acid.

The composition of the present invention inhibits the attack of aqueous acid solutions on ferrous metals at ambient to high temperatures, especially concentrated aqueous acid at temperatures above about 100°C up to about 200°C. These compositions are also useful for treating oil and gas producing formations, and for cleaning hard surfaces such as utility boilers and heat exchangers. This inhibited acid solutions may be pumped into an oil or gas well for the purpose of stimulating the increased production of hydrocarbons. The dissolution of a carbonate or sandstone formation using an inhibited acid solution is an important technique for increasing the production of oil and gas. The compositions of the present invention allow this process to be conducted at higher temperatures, and for longer contact times than previously possible, since the corrosion of the steel tubing is inhibited. Furthermore, since lower concentrations of an iodide salt and formic acid component are possible, the risk of damaging the carbonate or sandstone formation is also reduced.

The compositions of the present invention are prepared by mixing at least one iodide salt, and at least one compound selected from the group consisting of formic acid compounds, formic acid derivatives, and formate esters into an aqueous acid. A nitrogen compound as described above and/or an oxygen containing compound as described above is also included. The concentration of a non-oxidizing inorganic or organic acid in the composition of the present invention may vary from 1 to 30% by weight, based on the entire weight of the composition. The concentration of a nitrogen compound as described above in the composition of the present invention may vary from 0% to 3% by weight, based on the entire weight of the composition. The concentration of an iodide salt in the composition of the present invention may vary from 0.1 to 5% by weight, based on the entire weight of the composition. The concentration of at least one compound selected from the group of formic acid compounds, formic acid derivatives, and formate esters in the composition of the present invention may vary from 0.5 to 15% by weight, based on the entire weight of the composition. The concentration of an oxygen-containing compound in the composition of the present invention may vary from 0% to 3% by weight, based on the entire weight of the composition. The remainder of the aqueous composition consists essentially of water.

## DESCRIPTION OF THE PREFERRED EMBODIMENTS

In order that those skilled in the art may better understand how the present invention may be practiced, the following Examples are given by way of illustration and not by way of limitation. All parts and percentages are by weight, compared to the weight of the entire composition, unless otherwise noted.

In Table 1, a composition containing a mixture of 2-benzoyl-3-methoxy-1-propene and 2-benzoyl-1,3-dimethoxypropane (PK), a quinolinium compound, namely naphthylmethylquinolium chloride (NMQCl), potassium iodide, and formic acid was tested. The NMQCl was prepared by reflexing equimolar amounts of quinoline

and chloromethylnaphthylene in methanol at 70 to 75°C for six hours. This mixture was recrystallized from ethanol. The NMQCl is light tan and 90% pure by chloride titration.

Corrosion tests were run using an EG & G Chandler Engineering autoclave at a temperature of 177°C for four hours. The corrosion rate (CR) in (g/m²) is calculated :

$$CR = \Delta g \times 0.039$$

where Δg is the weight change of the coupon in grams.

Table 1 shows 4 hour corrosion rates.

TABLE 1

CORROSION RATES AT 177°C FOR N80 STEEL

15% HCl

| PK | NMQCl | KI | Formic | Rate ($g/cm^2$) |
|---|---|---|---|---|
| 0.5g | 0.5g | 2g | -- | 0.42 |
| 0.5 | 0.5 | -- | 5g | 0.12 |
| 0.5 | 0.5 | 0.5 | 1 | 0.019 |

28% HCl

| PK | NMQCl | KI | Formic | Rate ($g/cm^2$) |
|---|---|---|---|---|
| 1.5 | 1.5 | -- | 10 | 0.083 |
| 1.5 | 1.5 | 2 | -- | 0.12 |
| 1.5 | 1.5 | 2 | 10 | 0.036 |
| 1.5 | 1.5 | -- | 5 | 0.12 |
| 0.5 | 1.5 | 8 | -- | 0.098 |
| 0.5 | 1.5 | 4 | 4 | 0.04 |

The combination of potassium iodide and formic acid gives corrosion rates that are lower than the individual components. In the case of 15% HCl, when the combination of potassium and formic acid is used the concentrations of each component are much lower than when the components are used individually.

A mixture of potassium iodide, formic acid and 2% by weight of the Mannich reaction product of phenylethanone, formaldehyde, and ammonia was also tested at 149°C for 4 hours. The results are set forth in Table 2.

In addition to the Mannich reaction product described above, other nitrogen-containing reaction products are also useful as nitrogen compounds in the process of the present invention. Suitable nitrogen-containing reaction products are described in U.S. Patents 3,077,454 and 3,634,270 and 4,493,775. For example, the reaction product of an amine, a ketone, and an aldehyde, is described in U.S. Patent 3,634,270. Suitable amines include, for example, normal, iso- and tertiary alkyl amines having from 1 to 20 or more carbon atoms in the alkyl substituent, dialkylamines having 1 to about 20 carbon atoms in each alkyl substituent, and alkyl diamines having from 1 to about 20 carbon atoms in the alkyl portions thereof. Some of the ketones found to be affective are the aliphatic and aryl substituted aliphatic ketones and mixtures thereof such as, for example, acetophenone, propiophenone, and 1- and 2-acetonaphthone. Aldehydes having from 1 to 16 or more carbon atoms may be used, for example formaldehyde, hexanal, octanal, benzaldehyde, and the like. The reaction product of cyclohexylamine, formaldehyde, and acetophenone is described in U.S. Patent 4,493,775.

TABLE 2

CORROSION RATES AT 149°C

N80 STEEL FOR 4 HOURS

15% HCl

| % KI | % HCOOH | Rate ($g/cm^2$) |
|---|---|---|
| -- | -- | 0.049 |
| 0.6 | -- | 0.026 |
| -- | 0.5 | 0.023 |
| 0.15 | 0.35 | 0.020 |

28% HCl

| % KI | % HCOOH | Rate ($g/cm^2$) |
|---|---|---|
| -- | 1.0 | 0.055 |
| -- | 2.0 | 0.045 |
| 1.0 | -- | 1.534 |
| 2.0 | -- | 0.289 |
| 0.3 | 0.7 | 0.056 |
| 0.6 | 1.4 | 0.042 |

## Claims

1. A corrosion inhibiting composition, comprising :
0,1 to 5% by weight of the total composition of at least an iodide salt, and
1 to 30% by weight of the total composition of formic acid compounds, formic acid derivatives, and formate esters.

2. A corrosion inhibiting composition, as in claim 1 comprising :
at least one iodide salt,
at least one compound selected from the group consisting of formic acid compounds, formic acid derivatives, and formate esters, and
at least one compound selected from the group consisting of aliphatic and aromatic quaternary nitrogen compounds, and aliphatic or aromatic amines.

3. A corrosion inhibiting composition, as in claims 1 or 2 comprising :

at least one iodide salt,
at least one compound selected from the group consisting of formic acid compounds, formic acid derivatives, and formate esters, and
at least one compound selected from the group consisting of alkenyl phenones of the formula :

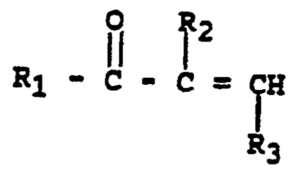

wherein $R_1$ may be unsubstituted or inertly substituted aryl of 6 to 10 carbon atoms, and $R_2$ and $R_3$ may be the same or different and each may be hydrogen, halogen, or an unsubstituted or inertly substituted aliphatic of 1 to 12 carbon atoms, and acetylenic alcohols having 3 to 10 carbon atoms.

4. The corrosion inhibiting composition set forth in claim 2, including at least one oxygen-containing compound selected from the group consisting of alkenylphenones and acetylenic alcohols.

5. The corrosion inhibiting composition set forth in claim 1, wherein said iodide salt is sodium iodide or potassium iodide.

6. The corrosion inhibiting composition set forth in claim 1, including at least one iodide salt, and at least one formic acid compound.

7. The corrosion inhibiting composition set forth in claim 6, wherein said formic acid compound has the formula :

$$HCOOR$$

wherein R is hydrogen, a phenyl group, an alkyl group having one to six carbon atoms, a cycloalkyl group having five or six carbon atoms, or an alkenyl or alkynyl group having two to six carbon atoms, which are unsubstituted or inertly substituted.

8. The corrosion inhibiting composition set forth in claim 1, including at least one iodide salt, and at least one formic acid derivative.

9. The corrosion inhibiting composition set forth in claim 8, wherein said formic acid derivative is a formamide of the formula :

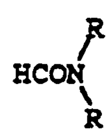

wherein R is hydrogen, a phenyl group, an alkyl group of one to six carbon atoms, a cycloalkyl group having five or six carbon atoms, or an alkenyl or alkynyl group having two to six carbon atoms, which are unsubstituted or inertly substituted.

10. The corrosion inhibiting composition set forth in claim 1, including at least one iodide salt, and at least one formic acid ester.

11. The corrosion inhibiting composition set forth in claim 10, wherein said formic acid ester is an ester of the formula :

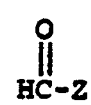

wherein Z is an alkoxy group of one to four carbon atoms.

12. The corrosion inhibiting composition set forth in claim 6, including at least one alkyl, alkenyl, aryl or alkylaryl quaternary nitrogen compound, said alkyl or alkyl substituent containing one to 20 carbon atoms and said alkenyl containing 2 to 20 carbon atoms.

13. The corrosion inhibiting composition set forth in claim 12, wherein said quaternary nitrogen compound is a quinolinium.

14. The corrosion inhibiting composition set forth in claim 6, including at least one alkyl or alkenyl amine, said alkyl or alkenyl including one alkyl or alkene group containing from 10 to 20 carbon atoms and two alkyl groups containing from 1 to 4 carbon atoms.

15. The corrosion inhibiting composition set forth in claim 8, including at least one alkyl, alkenyl, aryl or alkylaryl quaternary nitrogen compound, said alkyl or alkyl-substituent containing one to six carbon atoms and said alkenyl containing 2 to 20 carbon atoms.

16. The corrosion inhibiting composition set forth in claim 15, wherein said quaternary nitrogen compound is a quinolinium.

17. The corrosion inhibiting composition set forth in claim 8, including at least one alkyl or alkenyl amine, said alkyl or alkenyl including one alkyl or alkene group containing from 10 to 20 carbon atoms and two alkyl groups containing from 1 to 4 carbon atoms.

18. The corrosion inhibiting composition set forth in claim 10, including at least one alkyl, alkenyl, aryl or alkylaryl quaternary nitrogen compound, said alkyl or alkyl-substituent containing one to six carbon atoms and said alkenyl containing 2 to 20 carbon atoms.

19. The corrosion inhibiting composition set forth in claim 18, wherein said quaternary nitrogen compound is a quinolinium.

20. The corrosion inhibiting composition set forth in claim 10, including at least one alkyl or alkenyl amine, said alkyl or alkenyl including one alkyl or alkene group containing from 10 to 20 carbon atoms and two alkyl groups containing from 1 to 4 carbon atoms.

## Patentansprüche

1. Korrosionshemmende Zusammensetzung, umfassend :
0,1 bis 5 Gew.-% der gesamten Zusammensetzung an mindestens einem Jodidsalz und
1 bis 30 Gew.-% der gesamten Zusammensetzung an Ameisensäureverbindungen, Ameisensäurederivaten und Formiatestern.

2. Korrosionshemmende Zusammensetzung nach Anspruch 1, umfassend :
mindestens ein Jodidsalz,
mindestens eine Verbindung, ausgewählt aus der Gruppe, bestehend aus Ameisensäureverbindungen, Ameisensäurederivaten und
Formiatestern und mindestens eine Verbindung, ausgewählt aus der Gruppe, bestehend aus aliphatischen und aromatischen quaternären Stickstoffverbindungen und aliphatischen oder aromatischen Aminen.

3. Korrosionshemmende Zusammensetzung nach Anspruch 1 oder 2, umfassend :
mindestens ein Jodidsalz,
mindestens eine Verbindung, ausgewählt aus der Gruppe, bestehend aus Ameisensäureverbindungen, Ameisensäurederivaten und
Formiatestern und mindestens eine Verbindung, ausgewählt aus der Gruppe, bestehend aus Alkenylphenonen der Formel :

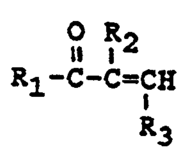

worin $R_1$ unsubstituiertes oder inert substituiertes Aryl mit 6 bis 10 Kohlenstoffatomen sein kann, und $R_2$ und $R_3$ gleich oder verschieden sein können und jeweils Wasserstoff, Halogen oder unsubstituiert oder inert substituiert aliphatisch mit 1 bis 12 Kohlenstoffatomen und acetylenische Alkohole mit 3 bis 10 Kohlenstotfatomen sein können.

4. Korrosionshemmende Zusammensetzung nach Anspruch 2, die mindestens eine sauerstoffhaltige Verbindung, ausgewählt aus der Gruppe, bestehend aus Alkenylphenonen und acetylenischen Alkoholen, enthält.

5. Korrosionshemmende Zusammensetzung nach Anspruch 1, worin das Jodidsalz Natriumjodid oder Kaliumjodid ist.

6. Korrosionshemmende Zusammensetzung nach Anspruch 1, die mindestens ein Jodidsalz und mindestens eine Ameisensäureverbindung enthält.

7. Korrosionshemmende Zusammensetzung nach Anspruch 6, worin die Ameisensäureverbindung die Formel besitzt:

$$HCOOR$$

worin R Wasserstoff, eine Phenylgruppe, eine Alkylgruppe mit einem bis sechs Kohlenstoffatomen, eine Cycloalkylgruppe mit fünf oder sechs Kohlenstoffatomen, oder eine Alkenyl- oder Alkinylgruppe mit zwei bis sechs Kohlenstoffatomen ist, die unsubstituiert oder inert substituiert sind.

8. Korrosionshemmende Zusammensetzung nach Anspruch 1, die mindestens ein Jodidsalz und mindestens ein Ameisensäurederivat enthält.

9. Korrosionshemmende Zusammensetzung nach Anspruch 8, worin das Ameisensäurederivat ein Formamid der Formel ist:

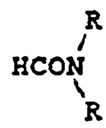

worin R Wasserstoff, eine Phenylgruppe, eine Alkylgruppe mit einem bis sechs Kohlenstoffatomen, eine Cycloalkylgruppe mit fünf oder sechs Kohlenstoffatomen, oder eine Alkenyl- oder Alkinylgruppe mit zwei bis sechs Kohlenstoffatomen ist, die unsubstituiert oder inert substituiert sind.

10. Korrosionshemmende Zusammensetzung nach Anspruch 1, die mindestens ein Jodidsalz und mindestens einen Ameisensäureester enthält.

11. Korrosionshemmende Zusammensetzung nach Anspruch 10, worin der Ameisensäureester ein Ester der Formel ist:

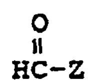

worin Z eine Alkoxygruppe mit einem bis vier Kohlenstoffatomen ist.

12. Korrosionshemmende Zusammensetzung nach Anspruch 6, die mindestens eine quaternäre Alkyl-, Alkenyl-, Aryl- oder Alkylaryl-Stickstoffverbindung enthält, wobei das Alkyl oder der Alkylsubstituent ein bis 20 Kohlenstoffatome umfaßt und das Alkenyl 2 bis 20 Kohlenstoffatome umfaßt.

13. Korrosionshemmende Zusammensetzung nach Anspruch 12, worin die quaternäre Stickstoffverbindung ein Chinolinium ist.

14. Korrosionshemmende Zusammensetzung nach Anspruch 6, die mindestens ein Alkyl- oder Alkenylamin enthält, wobei das Alkyl oder Alkenyl eine von 10 bis 20 Kohlenstoffatome enthaltende Alkyl- oder Alkengruppe und zwei von 1 bis 4 Kohlenstoffatome enthaltende Alkylgruppen umfaßt.

15. Korrosionshemmende Zusammensetzung nach Anspruch 8, die mindestens eine quaternäre Alkyl-, Alkenyl-, Aryl- oder Alkylaryl-Stickstoffverbindung enthält, wobei das Alkyl oder der Alkylsubstituent ein bis 6 Kohlenstoffatome umfaßt und das Alkenyl 2 bis 20 Kohlenstoffatome umfaßt.

16. Korrosionshemmende Zusammensetzung nach Anspruch 15, worin die quaternäre Stickstoffverbindung ein Chinolinium ist.

17. Korrosionshemmende Zusammensetzung nach Anspruch 8, die mindestens ein Alkyl- oder Alkenylamin enthält, wobei das Alkyl oder Alkenyl eine von 10 bis 20 Kohlenstoffatome enthaltende Alkyl- oder Alkengruppe und zwei von 1 bis 4 Kohlenstoffatome enthaltende Alkylgruppen umfaßt.

18. Korrosionshemmende Zusammensetzung nach Anspruch 10, die mindestens eine quaternäre Alkyl-, Alkenyl-, Aryl- oder Alkylaryl-Stickstoffverbindung enthält, wobei das Alkyl oder der Alkylsubstituent ein bis 6 Kohlenstoffatome und das Alkenyl 2 bis 20 Kohlenstoffatome enthält.

19. Korrosionshemmende Zusammensetzung nach Anspruch 18, worin die quaternäre Stickstoffverbindung ein Chinolinium ist.

20. Korrosionshemmende Zusammensetzung nach Anspruch 10, die mindestens ein Alkyl- oder Alkenylamin enthält, wobei das Alkyl oder Alkenyl eine von 10 bis 20 Kohlenstoffatome enthaltende Alkyl- oder Alkengruppe und zwei von 1 bis 4 Kohlenstoffatome enthaltende Alkylgruppen umfaßt.

## Revendications

1. Une composition inhibitrice de corrosion qui comprend :
de 0,1 à 5%, du poids total de la composition, d'un ou de plusieurs iodures, avec de 1 à 30%, du poids total de la composition, de composés, dérivés ou esters de l'acide formique.

2. Une composition selon la revendication 1 qui comprend :
un ou plusieurs iodures,
un ou plusieurs composés choisis parmi des composés, dérivés et esters de l'acide formique, et
un ou plusieurs composés choisis parmi des composés d'ammonium quaternaires aliphatiques ou aromatiques et des amines aliphatiques ou aromatiques.

3. Une composition selon la revendication 1 ou 2 qui comprend :
un ou plusieurs iodures,
un ou plusieurs composés choisis parmi des composés, dérivés et esters de l'acide formique, et
un ou plusieurs composés choisis parmi des alcénylphénones de formule :

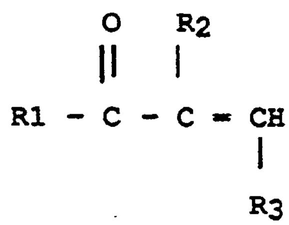

dans laquelle $R_1$ peut être un aryle en $C_6$ à $C_{10}$, sans substituants ou avec des substituants inertes, et $R_2$ et $R_3$, qui peuvent être identiques ou différents l'un de l'autre, peuvent être chacun l'hydrogène ou un halogène ou un radical aliphatique en $C_1$ à $C_{12}$ sans substituants ou avec des susbstituants inertes, et des alcools acétyléniques ayant de 3 à 10 atomes de carbone.

4. La composition selon la revendication 2 qui comprend un ou plusieurs composés oxygénés choisis parmi des alcénylphénones et des alcools acétyléniques.

5. La composition de la revendication 1 dont l'iodure est l'iodure de sodium ou de potassium.

6. La composition de la revendication 1 qui comprend un ou plusieurs iodures et un ou plusieurs composés de l'acide formique.

7. La composition de la revendication 6 dont le composé d'acide formique est un composé de formule :

$$HCCOR$$

dans laquelle R représente l'hydrogène, un phényle, un alkyle ayant de 1 à 6 atomes de carbone, un cycloalkyle ayant 5 ou 6 atomes de carbone ou bien un alcényle ou un alcynyle ayant de 2 à 6 atomes de carbone, tous radicaux qui peuvent être sans substituants ou avoir des substituants inertes.

8. La composition de la revendication 1 qui comprend un ou plusieurs iodures et un ou plusieurs dérivés de l'acide formique.

9. La composition de la revendication 8 dans laquelle le dérivé d'acide formique est un formamide de formule :

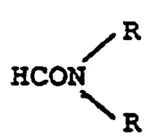

dans laquelle R représente l'hydrogène, un phényle, un alkyle ayant de 1 à 6 atomes de carbone, un cycloalkyle ayant 5 ou 6 atomes de carbone ou bien un alcényle ou un alcynyle ayant de 2 à 6 atomes de carbone, tous radicaux qui peuvent être sans substituants ou avoir des substituants inertes.

10. La composition de la revendication 1 qui comprend un ou plusieurs iodures et un ou plusieurs esters de l'acide formique.

11. La composition de la revendication 10 dans laquelle l'ester d'acide formique est un ester de formule :

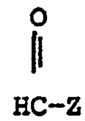

Z désignant un groupe alcoxy ayant de 1 à 4 atomes de carbone.

12. La composition de la revendication 6 qui comprend un ou plusieurs composés d'ammonium quaternaires alkyliques, alcényliques, aryliques ou alkylaryliques dont les alkyles ou les substituants alkyliques ont de 1 à 20 atomes de carbone et le groupe alcényle a de 2 à 20 atomes de carbone.

13. La composition de la revendication 12 dont le composé d'ammonium quaternaire est un composé de quinoléininium.

14. La composition de la revendication 6 qui comprend une où plusieurs alkylamines ou alcénylamines avec un groupe alkyle ou alcényle ayant de 10 à 20 atomes de carbone et deux alkyles ayant de 1 à 4 atomes de carbone.

15. La composition de la revendication 8 qui comprend un ou plusieurs composés d'ammonium quaternaires alkyliques, alcényliques, aryliques ou alkylaryliques dont l'alkyle ou le substituant alkylique a de 1 à 6 atomes de carbone et l'alcényle de 2 à 20.

16. La composition de la revendication 15 dans laquelle le composé d'ammonium quaternaire est un composé de quinoléinium.

17. La composition de la revendication 8 qui comprend une ou plusieurs alkylamines ou alcénylamines avec un groupe alkyle ou alcényle ayant de 10 à 20 atomes de carbone et deux alkyles ayant de 1 à 4 atomes de carbone.

18. La composition de la revendication 10 qui comprend un ou plusieurs composés d'ammonium quaternaires alkyliques, alcényliques, aryliques ou alkylaryliques dont l'alkyle ou le substituant alkylique a de 1 à 6 atomes de carbone et l'alcényle de 2 à 20.

19. La composition selon la revendication 18 dans laquelle le composé d'ammonium quaternaire est un composé de quinoléinium.

20. La composition de la revendication 10 qui comprend une ou plusieurs alkylamines ou alcénylamines avec un groupe alkyle ou alcényle ayant de 10 à 20 atomes de carbone et deux alkyles ayant de 1 à 4 atomes de carbone.